# EUROPEAN PATENT APPLICATION

(11) **EP 0 732 580 A2**
(43) Date of publication of application: **18.09.1996**
(21) Application number: 96301687.8
(22) Date of filing: 12.03.1996
(51) Int. Cl.: G01N 21/31

(54) **Apparatus for automatic identification of gas samples**

(30) Priority: 13.03.1995 US 403161
(71) Applicant: OHMEDA INC., Liberty Corner, New Jersey 07938-0804 (US)
(72) Inventor: Fischer, Russell John, Summit, New Jersey 07901 (US); Crane, Patrick Francis, Boulder, Colorado 80301 (US); Yu, Clement Lim, Buffalo Grove, Illinois 60089 (US); Walker, Stephen Daniel, Boulder, Colorado 80303 (US)
(74) Representative: Gough, Peter

(57) **Abstract**

The gas sample identification apparatus transmits at least one beam of light of predefined frequency band through a gas sample present in a gas sampling chamber. The presence and concentration of various agents in the gas sample are determined by a linear variable filter that selectively passes the light beam transmitted through the gas sample chamber to an array of detectors. The detectors are positioned to receive only a narrow passband component of the light beam. The output signals from the array of detectors is processed by a multivariate statistical processor to accurately identify both the presence and concentration of one or more agents contained in the gas sample.

## Description

This invention relates to an apparatus that is used to identify accurately components contained in a gas sample and their concentrations, for example, the concentration of respiratory and anaesthetic gases contained in respiratory gas samples obtained from an anaesthetised patient. More particularly, the present invention relates to a spectral gas analyser apparatus for transmitting radiation on folded optical paths from a source to a detector via sample and reference gas chambers according to a selected duty cycle.

It is a problem in the field of medical monitoring equipment to produce an apparatus for measuring the concentration of anaesthetic agents in a respiratory gas sample that is inexpensive, simple to use, very accurate, fast in its measurements and yet adaptable to measure new anaesthetic agents that are introduced to the field of anaesthesiology. In the field of anaesthesiology, there are four commonly used anaesthetic agents: nitrous oxide, halothane, enflurane and isoflurane. Most existing infrared anaesthetic agent monitoring apparatus operate by measuring the optical transmissivity of a respiratory gas sample at four wavelengths of light. The resultant measurements are processed using matrix mathematics to identify a single one of these four anaesthetic agents that is contained in the gas sample as well as its concentration.

Existing infrared anaesthetic agent monitoring apparatus generally perform two functions: a first that identifies the anaesthetic agent that is present in the respiratory gas sample, and a second that determines the concentration of the identified anaesthetic agent in the respiratory gas sample. These two functions may be performed either by two separate sets of circuitry in the apparatus or by a common set of circuitry. These apparatus are determined systems, with the number of spectral filters used therein being equal to the number of anaesthetic agents that the apparatus is designed to identify. The selection of the wavelengths passed by the spectral filters is driven by the desire to use wavelengths that are strongly and uniquely absorbed by the anaesthetic agents in question. Beer's Law (A = ECL) teaches that the light absorbance exhibited by a respiratory gas sample is substantially linearly related to the concentration of the anaesthetic agent contained in the respiratory gas sample. Since the terms E and L in this equation are constants, the presence and partial pressure of the anaesthetic agent are determined by monitoring wavelength specific light absorbance values. If each anaesthetic agent absorbed energy at only one of the selected wavelengths, the analytical task is simple in that the concentration of each anaesthetic agent linearly follows the light absorbance measured at that one wavelength. However, anaesthetic agents are chemically similar and their absorbance spectra generally overlap, exhibiting varying degrees of colinearity. This lack of absorbance uniqueness necessitates measuring light absorbance of the respiratory gas sample at all of the selected wavelengths to identify and quantify the anaesthetic agent contained in the respiratory gas sample.

A basic limitation of existing determined infrared anaesthetic agent monitoring apparatus is that they do not examine enough spectral wavelengths to identify accurately anaesthetic agents when the respiratory gas sample includes common contaminants, such as alcohol and methane, whose absorbance spectra overlap those of anaesthetic agents. This problem arises because the number of analytes (anaesthetic agents plus contaminants) exceeds the number of spectral measurements available to the anaesthetic agent monitoring apparatus, thereby rendering the anaesthetic agent monitoring apparatus an underdetermined system. In addition, the introduction of a new anaesthetic agent forces a redesign of the anaesthetic agent monitoring apparatus, which becomes an underdetermined system in the face of a broader set of anaesthetic agents.

In addition, the prior art anaesthetic agent monitoring apparatus do not measure the concentration of CO₂ gas in the respiratory gas sample. A separate apparatus is routinely provided to perform this measurement.

Another basic limitation of certain existing aesthetic agent monitoring apparatus relates to the use of multiple radiation sources, multiple optical filters and/or multiple radiation detectors to monitor multiple agents. Potential sources of error in such apparatus include variations in source intensity or spectral output, variations relating to the optics and optical path between the source and detector and variations in detector response. Some of these variations are attributable to difference between multiple system components (e.g., multiple sources or detectors) or performance variations for a single component over time, and others are attributable to environmental factors such as changes in ambient temperature. It will be appreciated that minimising such sources of potential error is crucial in many applications involving the monitoring of respiratory and anaesthetic gases.

In addition to eliminating sources of error, it is desirable to limit the number of active components such as radiation source and receiver components, thereby simplifying analyser design, reducing costs, reducing power requirements and heat production, and increasing reliability. Moreover, for many applications where space is limited, it is desirable to reduce analyser size.

A further limitation of certain existing anaesthetic agent monitoring apparatus is that such apparatus tend to use their light sources inefficiently. In order to analyse multiple components in a gas sample, light transmitted through the gas sample can be separately analysed at multiple wavelengths. Some conventional apparatus conduct such multiple wavelength analyses by sequentially positioning optical band pass filters with different wavelength transmissivity characteristics in the apparatus beam path. Other conventional apparatus employ multiple, spaced detectors with associated filters, all in the area of a broad beam. In either case, a large portion of the source energy may not be used for gas analysis purposes. As a result, such apparatus tend to be inefficient with respect to source energy usage and produce more heat than would otherwise be necessary.

The above described problems are solved and a technical advance achieved in the field by the apparatus and method for the automatic identification of gas samples of the present invention which utilises a new architecture to accurately identify analytes contained in a gas sample and their respective concentrations.

According to one aspect of the present invention, apparatus for identifying the concentration of ones of n anaesthetic agent components contained in a respiratory gas sample, n being a positive integer greater than zero, comprises:
a gas sample chamber having an inlet port and an outlet port and through which a respiratory gas sample to be analysed is passed from said inlet port to said outlet port;
means for irradiating said gas sample with light of predetermined frequency band as said respiratory gas sample passes through said gas sample chamber;
means for detecting, at more than n selected wavelengths, light emanating from said gas sample chamber as a result of irradiating said respiratory gas sample with said light of predetermined frequency band; and
means for multi-variate statistically processing said detected light to identify a concentration of said anaesthetic agent components.

One application of this apparatus is to identify anaesthetic agents contained in a respiratory gas sample as well as their relative concentrations. This apparatus transmits at least one beam of light of predetermined frequency band through a respiratory gas sample that is passed through a gas sample chamber. This frequency band is selected to contain unique spectral signatures from all the analytes of interest. The presence and concentration of both carbon dioxide (CO₂) and the anaesthetic agents in the respiratory gas sample are determined by the use of an optical path that, in one embodiment of the invention, includes a variable filter that passes selected wavelength components (7-10 microns) of the light beam that is transmitted through the gas sample chamber to an array of light detectors. The light detectors are each positioned with respect to the variable filter to receive only a narrow passband component of the light beam that is transmitted through the gas sample chamber. A processor receives the output signals from the array of light detectors and accurately identifies both the presence and concentration of one or more anaesthetic agents contained in the respiratory gas sample.

This apparatus simultaneously measures anaesthetic agents and CO₂. The CO₂ signals are provided by a dedicated detector(s) which underlies a separate CO₂ filter which abuts the variable filter. This dedicated detector is optically segregated from the detectors which service the linear variable filter, but it can remain part of a singular detector array. An alternative to the use of two filters is the use of selected wavelength components for CO₂ and anaesthetic agents that span a single band, such as 3-5 microns. The processor uses a multi-variate statistical technique to precisely differentiate among the numerous anaesthetic agents. In particular, the anaesthetic agent monitoring apparatus uses partial least squares as the computation method. This method has advantages over other computational techniques in that the regression coefficients and predicted concentrations for each analyte can be computed independent of each other. In addition, the partial least squares technique is better suited to predict analyte concentration in the presence of nonlinearities. The partial least squares method is implemented in the gas sample identification system, which is an "overdetermined" system and provides a surfeit of spectral information during each sample period by use of a variable filter tuned to a spectrally rich region to provide useful (high signal to noise ratio) information. An overdetermined system, one that examines more wavelengths than analytes, has more spectral information available and is better able than a determined system to resolve subtle distinctions between the absorbance spectra of chemically similar analytes. The overdetermined system processes the pattem of spectral measurements which results from the unique spectral signature of the anaesthetic agent, rather than seeking a single unique feature of the spectral signature of the anaesthetic agent. This anaesthetic agent monitoring apparatus provides synchronous acquisition of the entire spectrum of interest, which allows for quicker and more accurate identification and quantification of anaesthetic agents contained in a respiratory gas sample.

A training set of anaesthetic agents and combinations of anaesthetic agents is presented to the automatic gas sample identification apparatus to generate data, indicative of the combination of output signals from the light detectors for the specific anaesthetic agent or combination of anaesthetic agents. The processor uses this data to create a calibration set which is used in subsequent measurements to identify the anaesthetic agent present in the respiratory gas sample and its concentration by comparing the present measurement with the calibration set. The processor can adapt to new inputs by providing a new calibration set and can thereby extrapolate its knowledge to cover new anaesthetic agents and concentrations of anaesthetic agents without requiring modification of the apparatus. The noted anaesthetic agents have strong absorbance at the selected range of wavelengths and a new anaesthetic agent is likely to also have strong absorbance in this range.

The above noted characteristics can be advantageously implemented using an apparatus architecture where a converging radiation beam is transmitted from a source side of a sample chamber through the sample chamber to directly impinge on a detector, thereby reducing or eliminating the need for detector side collection optics. Such an apparatus includes a radiation source on one side of the sample chamber, a radiation detector on the opposite side of the sample chamber, and collection optics on the source side of the sample chamber for collecting radiation from the source to form a converging beam which is directed at the detector via or through the sample chamber. A filter, preferably a variable filter, can be employed in conjunction with the detector to allow for multiple component or polychromatic analysis as noted above. In this manner, radiation from an oppositely located source is directly received by a filter and detector upon exiting a sample chamber, thereby reducing detector side components and space requirements and reducing downstream optical losses.

In one embodiment, two optical paths are provided from a single radiation source to a single radiation detector. One of the optical paths passes through a sample chamber containing the gas to be analysed. Radiation transmitted by the other path is used as a reference and may be directed through a chamber that is evacuated, exposed to the ambient environment or contains a sample having a known gaseous composition. Radiation transmitted from the source to the detector via the reference path provides valuable optical performance information for use in accurately determining the composition of the gas under analysis. Preferably, the source is located upstream from the gas chambers and is thermally shielded from heat sensitive optical and detector elements and the gas samples to reduce undesirable heat related variances.

The preferred apparatus further employs an optical chopper to permit selective transmission of radiation from a single source via two optical paths according to a selected duty cycle. Each of the optical paths is defined in part by an optical element, such as a lens or mirror, that receives radiation from the source. The optical chopper includes a moveable radiation mask having at least one opening to allow passage of radiation. Each of the optical paths includes an optical element positioned so that the respective elements are spaced at least about 90° apart relative to the source. More preferably, the respective optical elements and source are about 180° apart, i.e., substantially collinear. Additionally, the mask is preferably provided in the form of a rotatable cylinder positioned around the source. The cylinder provides a degree of heat insulation in addition to optical masking. The operation of the chopper can be co-ordinated with cycling of a detector to achieve a desired sampling rate or duty cycle. The preferred apparatus also employs a novel infrared (IR) source. The IR source comprises an electrical resistance heater element in thermal contact with an elongate emitter plate. Preferably, the emitter plate has a substantially planar emitter surface and, more preferably, has two, oppositely directed substantially planar emitter surfaces for illuminating two optical paths. In one embodiment the surface has a width of at least about 3 mm and a length of at least about 12 mm. The emitter may be constructed from black silicon nitride. The heater element is adapted for interconnection to an external power source which may provide power at 100 V rms. The IR source is preferably operated at a temperature of at least about 800°C-900°C and emits blackbody radiation including radiation in the 4 to 12 micrometer wavelength region and, more particularly, the 7 to 10 micrometer wavelength region. More preferably, the IR source is operated at a temperature of at least about 1200°C. Operation in the preferred temperature ranges has been found to facilitate highly accurate analysis, with an improved signal-to-noise ratio, in the system described in detail below.

According to a further aspect of the present invention, a method for identifying the concentration of ones of n anaesthetic agent components contained in a respiratory gas sample, n being a positive integer greater than zero, comprises the steps of:
passing through a gas sample chamber, having an inlet port and an outlet port, a respiratory gas sample to be analysed from said inlet port to said outlet port;
irradiating said gas sample with light of predetermined frequency and as said respiratory gas sample passes through said gas sample chamber;
detecting, at more than n selected wavelengths, light emanating from said gas sample chamber as a result of irradiating said respiratory gas sample with said light of predetermined frequency band, and
multi-variate statistically processing said detected light to identify a concentration of said anaesthetic agent components.

An embodiment of the invention will now be described, by way of example, reference being made to the Figures of the accompanying diagrammatic drawings in which:-
Fig. 1 illustrates, in block diagram form, the overall architecture of the automatic gas sample identification apparatus of the present invention;
Fig. 2 illustrates additional implementation details of the automatic gas sample identification apparatus via a top view of the apparatus;
Figs. 3 and 4 illustrate, in exploded block diagram form, and side view, respectively, an embodiment of the light detector apparatus;
Fig. 5-6 illustrate, in side view, the light generation apparatus;
Figs. 7a, 7b and 8 illustrate a front view, a top view and a side perspective exploded view, respectively, of the gas sample and reference chambers;
Fig. 9 illustrates in block diagram form the architecture of a data conversion apparatus used in the detector circuit; and
Figs. 10a and 10b are side and bottom views, respectively, of the light source of the apparatus of Fig. 1.

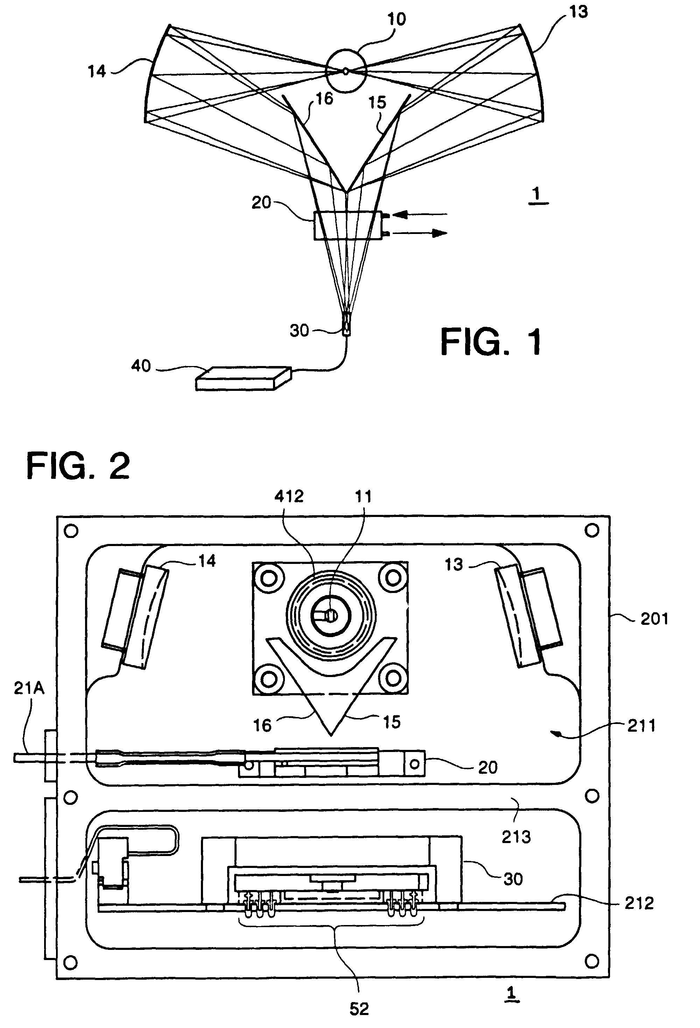

Fig. 1 illustrates in block diagram form the overall system architecture of the apparatus for the automatic identification of gas samples, while Fig. 2 illustrates additional implementation details of this apparatus. This gas sample identification apparatus 1 functions to both detect the presence and measure the concentration of analytes contained in a gas sample that is passed through a gas chamber 20. The anaesthetic agent monitoring system apparatus that is described herein as the preferred embodiment of the invention represents one application of this inventive concept, and the overall architecture of this gas sample identification apparatus 1 is equally applicable to other applications where one or more analytes are contained in a gas sample, and the presence and concentration of these analytes must be determined with accuracy.

In Fig. 1, the gas sample identification apparatus 1 is illustrated as including a light source 10, optical elements in the form of mirrors 13-16, gas chamber 20, detector circuit 30 and computation circuit 40. In operation, a gas sample is passed through gas chamber 20 while at least one beam of light produced by light source 10 is transmitted through the gas chamber 20. The gas sample has optical transmissivity characteristics that are determined by the type of components contained in the gas sample as well as their concentrations. Therefore, the light beam that passes through the gas sample in gas chamber 20 is optically processed by various filter and detector elements contained in detector circuit 30 to produce electrical signals that can be used by computation circuit 40 to identify precisely the components contained in the gas sample as well as their relative concentrations. In the application of this apparatus to anaesthetic agent monitoring, respiratory gases obtained from an anaesthetised patient are passed through gas chamber 20 to identify the presence and concentration of carbon dioxide (CO₂) as well as the presence and concentration of one or more anaesthetic agents in the patient's respiratory gases. These measurements must be very accurate in both the identification of the anaesthetic agents in use and the concentration of these agents to avoid injury to the patient.

In the field of anaesthesiology, there are four commonly used anaesthetic agents: nitrous oxide, halothane, enflurane and isoflurane. Additional new anaesthetic agents: desflurane and sevoflurane, are being introduced. Therefore, the detector circuit 30 and computation circuit 40 must have the capability to measure subtle differences in optical transmissivity in the gas sample to distinguish between the various anaesthetic agents and combinations of anaesthetic agents used in various concentrations.

Fig. 2 illustrates additional implementation details of a portion of the gas sample identification apparatus 1. The gas sample identification apparatus 1 is typically installed in a housing 201 that functions to provide an enclosure that protects the elements of gas sample identification apparatus 1 from the ambient environment. The housing 201 is manufactured from a material, such as aluminium, that has a low level of outgassing and also provides dimensional stability over a wide range of temperatures. The housing 201 also functions as a rigid substrate to which the various elements of the gas sample identification apparatus 1 are secured and positioned. The top view of the gas sample identification apparatus 1 of Fig. 2 is of the housing 201 with its cover plate removed. The housing 201 is segmented into two sections, 211, 212. The first section 211 houses the optical elements 13-16 and the gas chamber 20, while the second section 212 houses the light detector 30 and at least some of computation circuit 40. A bulkhead 213 forms the common wall of the first 211 and second 212 sections and functions to provide a barrier that limits the transfer of stray light from the first section 211 to the second section 212.

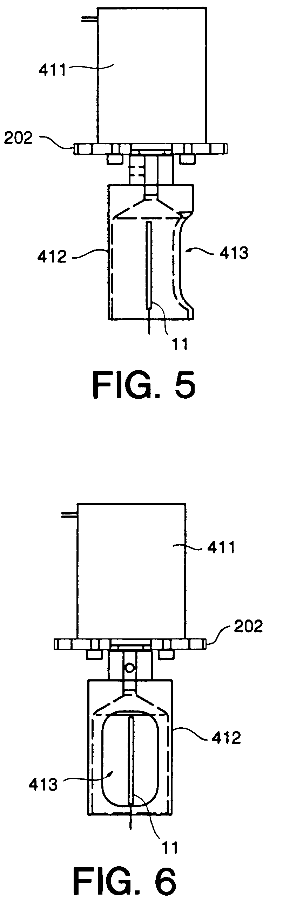

Figs. 5 and 6 illustrate two side views of the light source 10 used in this gas sample identification apparatus 1. The light source 10 comprises a "blackbody" source of infrared light 11, mounted in housing 201 of Fig. 2. Infrared source 11 is surrounded by a drum shaped chopper 412, which is mounted on the cover plate 202 of housing 201, and produces a light beam of the desired band of wavelengths of light. The infrared source 11 is a featureless 'bar' shaped element that has two flat, 180° opposed emissive surfaces to produce two light beams, transmitted in opposite directions from infrared source 11. The image of source 11 is transmitted by mirrors 13-16 to the gas chamber 20 so the use of a featureless flat source maximises the uniformity of the light beam applied to gas chamber 20.

The illustrated source 11 transmits light encompassing a characteristic absorption band of at least one respiratory/anaesthetic component of interest. Although various wavelengths or spectra can be employed including IR, visible and ultraviolet wavelength ranges, the illustrated source 11 is a polychromatic blackbody IR source transmitting light in the 4-12 micron wavelength range and, more particularly, in the 7-10 micron wavelength range, which includes strong absorption bands of several respiratory/anaesthetic components.

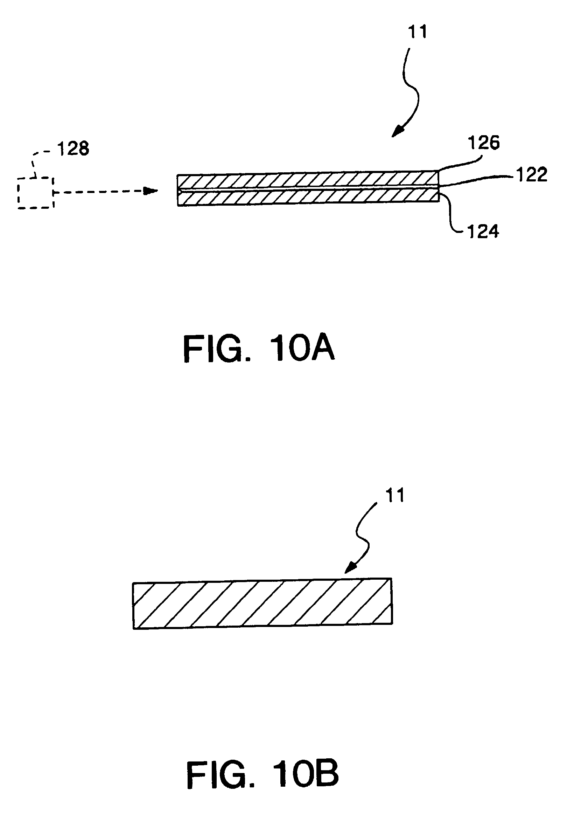

The source 11, as shown in Figs. 10a and 10b, is constructed in the form of an elongate, substantially homogeneous strip. As described below, the detector of the illustrated system is comprised of an elongate, columnar array of detector elements, e.g., a 1 by N array. The detector array is employed in conjunction with a variable filter so that the array elements provide intensity detection for multiple wavelengths or wavelength bands across a desired spectral range. The elongate, homogeneous source 11, in combination with the illustrated imaging optics, allows complete, substantially even and intense illumination of the detector array for enhanced polychromatic analysis.

The source 11 includes a heater element 122 sandwiched between emitter plates 124 and 126. The heater element 122, which can be any suitable electrical resistance element, is preferably screened onto one of the plates 124 or 126 which serves as a substrate, although separate resistance wires may be employed. The illustrated plates 124 and 126 are constructed from black silicon nitride and are about 3 to 3.5 mm wide with a length of approximately 12 mm. The leads to the illustrated heating element are connected to a power source directly through the substrate silicon nitride plate 124 or 126. In order to provide the desired illumination, the source is preferably operated at a temperature of at least 800°-900°C or, more preferably, greater than 900°C. The illustrated source 11 is powered by a 100V rms power source 128 and reaches a temperature of approximately 1200°C. Operation in the preferred ranges has been found to provide an improved signal to noise ratio and improved overall performance in the context of the illustrated high frequency chopped optical path apparatus 1.

The chopper 412 comprises a motor 411 attached by a shaft to chopper drum 412, which includes at least one aperture 413 formed therein. When the chopper drum 412 rotates, the two light beams that emanate from infrared source 11 are alternately transmitted by the aperture 413 which passes the light beams to a corresponding one of spherical mirrors 13, 14. The aperture 413 is substantially rectangular in shape, with rounded corners. The size and shape of aperture 413 are such that for 25% of the rotational cycle time of chopper drum 412, the gas sample chamber 22a is illuminated, followed by a dark time that is 25% of the cycle time, followed by illuminating the reference chamber 22b for 25% of the cycle time, followed by a dark time that is 25% of the cycle time.

The spherical mirrors 13, 14 focus the light beam received from chopper drum 412 on to flat mirrors 15, 16, respectively. The flat mirrors 15, 16 produce light beams of narrow angular dispersion which are applied to gas sample chamber 22a and reference chamber 22b, respectively of gas chamber 20. This configuration ensures that the incident angle of the light beam on the chambers 22a, 22b is maintained at a small value. The mirrors 13-16 are manufactured from a thermally stable highly reflective material, such as polished aluminium. These mirrors must reflect infrared wavelengths, and maintain their alignment, which requirement is simplified by the fact that the housing and mirrors are manufactured from the same material, thereby eliminating inconsistent thermal characteristics as a factor.

The geometric arrangement of spherical mirrors 13, 14, flat mirrors 15, 16, and gas chamber 20, defines optical paths such that the beam incidence angles on the detector circuit 30 are nearly normal. In order to enhance operation of the detector circuit 30 including its variable filter, it is preferred that incidence angles be much less than 30-35° from normal (e.g., the angle that would be obtained if the beams were reflected directly from the spherical mirrors 13, 16 to the detector circuit 30 without intervening flat mirrors 15, 16). More preferably, the incidence angles are less than about 15° from normal to reduce spectral smearing. In the illustrated embodiment, the limit incidence angles are less than about 15° from normal, e.g., about 10° for centrally located pixels of the detector array and 14° for outer pixels, all within filter specifications.

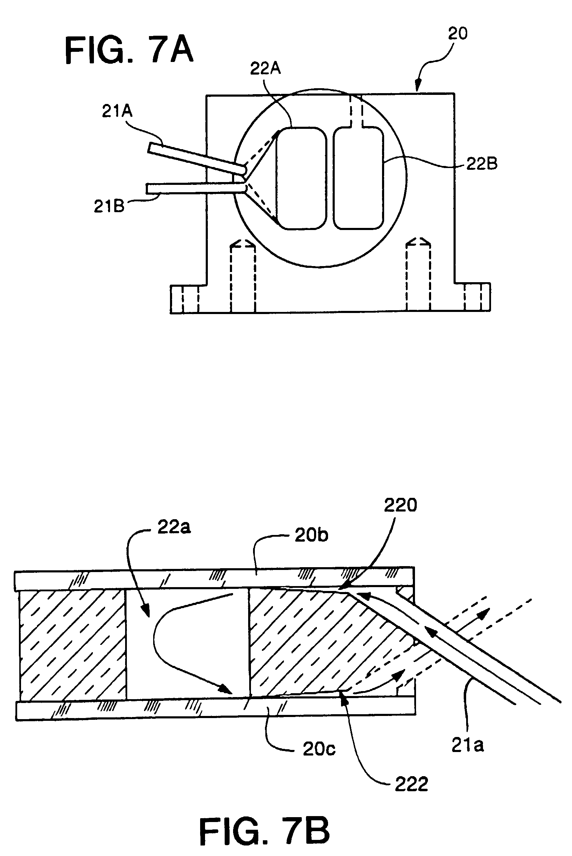

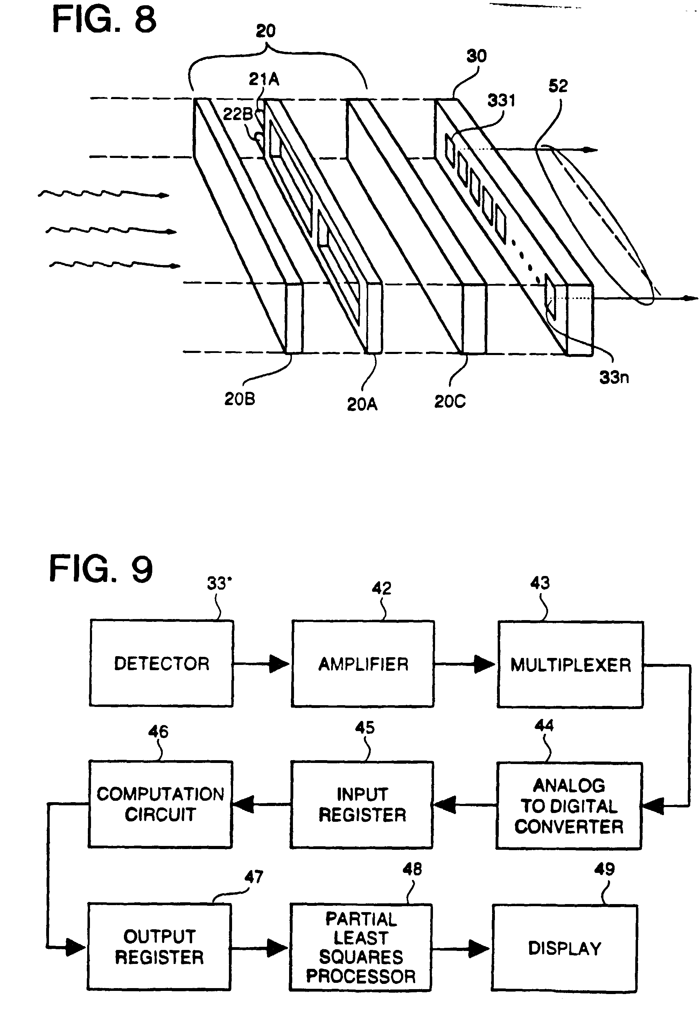

Figs. 7a and 7b illustrate front and top views, respectively, of gas chamber 20 and Fig. 8 illustrates an exploded view. The gas chamber consists of a gas sample chamber 22a and a reference chamber 22b positioned coplanar and side by side. Gas chamber 20 consists of a frame 20a to which is attached barium fluoride window 20b to admit light to both sections 22a, 22b of only the wavelengths within the range of 0 - 12 microns. Also attached to frame 20a, on a side opposite window 20b, is barium fluoride window 20c. The combination of frame 20a, windows 20b, 20c creates a sealed reference chamber 22b, having a port that is open to the ambient pressure and atmosphere inside of housing 201. The reference chamber 22b can alternatively be evacuated or contain selected gases that do not absorb at the wavelengths of interest for the gas sample chamber 22a. The two identical light beams that emanate from light source 10 traverse identical optical paths through the gas sample identification apparatus 1. The only difference in the light paths is that reference chamber 22b does not contain a respiratory gas sample, while the gas sample chamber 22a does. By measuring the light intensity of the light beam that traverses reference chamber 22b, the apparatus can establish a baseline reference for the absorbance value at the selected wavelengths, since the two optical paths are identical except for the presence of the respiratory gas sample. The concentration of the respiratory gas sample present in the gas sample chamber 22a is determined by computing the ratio of the log of the intensity of the light beam passed through the reference chamber 22b to the log of the intensity of the light beam passed through the gas sample chamber 22a.

The combination of frame 20a, windows 20b, 20c also creates sealed gas sample chamber 22a, having an inlet port 21a and an outlet port 21b at one end. As shown most clearly in Figs. 7a and 7b, the respiratory gas from a patient enters gas sample chamber 22a via inlet port 21a and passes along the length of the gas sample chamber 22a juxtaposed to window 20b, then along window 20c, to outlet port 21b where it exits. That is, window 20b forms one wall of an inlet channel 220 and window 20c forms one wall of an outlet channel 222 so that the respiratory gas sample is circulated through the gas sample chamber 22a as generally shown in Fig. 7b. The gas inlet channel 220 and gas outlet channel 222 provide substantially constant cross sectional area along their length and change shape gradually to a final flat fan shaped aperture as the channels enter the gas sample chamber 22a to spread the gas sample uniformly along the entire width of the window 20b. In this regard, the channels 220 and 222 narrow as viewed from the top (Fig. 7b) and widen as viewed from the side (Fig. 7a) to provide a narrow slipstream of gas at the inlet and outlet ports of chamber 22a. By gradually forming the gas in this manner, a more laminar flow and more uniform dispersion is achieved with a minimum of mixing, thereby enhancing accuracy. Alternately, the inlet gas could be spread by configuring inlet tube 21a such that gas was directed perpendicularly against window 20b. The gas sample is irradiated along the entire length of gas sample chamber 22a by one of the two identical light beams produced by light source 10.

In determining the configuration of the optical elements of gas sample identification apparatus 1, it is important to note that the spectral content of the light used and the spectral resolution of the individual pixels are major design considerations. The wavelengths of light used should preferably encompass some unique absorbance patterns of the target analytes while also covering a range where contaminants have low absorbance. The number of detectors is a function of the number of spectral measurements required to identify uniquely the set of components of interest. Acquiring additional spectral features of a gas sample provides increased analytical power, but since the entire absorption spectrum is concurrently gathered from a single respiratory gas sample, the number of detectors is also a function of decreased signal to noise on individual detectors. Furthermore, the larger the number of spectral samples, the greater the size of the gas sampling chamber (span of the linear variable filter) and the slower the response time due to latency in gas transfer through the gas sample chamber 22a. The path length of the gas sample chamber 22a is selected as a function of the components being measured. The path length should be long enough to enable lightly absorbing components to cause a measurable change in intensity yet not enabling highly absorbing components to absorb substantially all the incident light at selected wavelengths. With regard to spectral resolution, the pixel bandwidth is defined by: the design of the linear variable filter, the pixel width, the proximity of the detector to the filter, and the angle of incidence of the light on the detector. The pixel bandwidth selected for this application is 0.69% of the centred wavelength. It is important to maintain a high spectral resolution to minimise deviations from Beer's Law and to retain the distinguishing spectral features of the component of interest. The spectral resolution can be increased by narrowing the pixel width, but this results in less incident light for each detector and can reduce the signal to noise ratio.

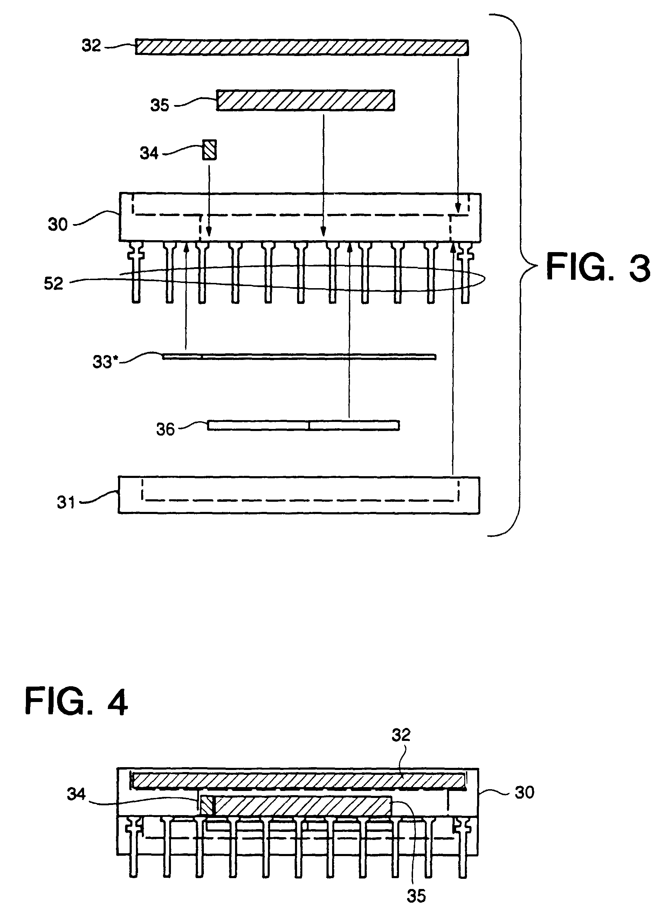

Figs. 3 and 4 illustrate side exploded and side views, respectively of the light detector apparatus 30. The light detector apparatus 30 consists of a ceramic package 31, into which are mounted a number of elements. A blocking filter 32 manufactured from optical grade germanium seals the package and passes light of wavelengths from 4-12 microns. Mounted below blocking filter 31 are two filter elements: CO₂ filter 34 and a variable filter 35 which is abutted to the CO₂ filter 34. The CO₂ filter 34 is manufactured from optical grade sapphire and passes a narrow band of light centred around the wavelength 4.26 microns, which is representative of the absorption spectrum of CO₂. The variable filter 35 consists of a structure that creates a spatially varying filter characteristic in the wavelength range of 7-10 micron range. Thus, the physical position of each detector placed behind the varying filter 35 determines the selected passband component of the frequency band that is detected by the detector. In the preferred embodiment disclosed herein, a substantially linearly varying filter characteristic is selected to produce the measurements at the selected passbands of interest. This can be accomplished in a number of ways, preferably using a wedge-filter that is constructed of alternating layers of high and low diffractive index selectively deposited on a transparent substrate. The thicknesses of these layers are tapered in a controlled manner to create a two-dimensional interference filter of precisely controlled varying characteristics. Alternatively, a plurality of bandpass filters configured into a linear array can be used, with, as in this preferred embodiment, one end of linear bandpass filter 35 passing light from wavelength 7.2 micrometers to the other end of linear variable filter 35 which passes light up to a wavelength 9.8 micrometers, as a function of position along the length of linear variable filter 35. The variable filter 35 allows light to exit gas sample chamber 22a only if the wavelength of light matches the filter characteristic of variable filter 35 at that particular locus. Thus, by placing detectors 331-33n at various sites along the length of variable filter 35, narrow passbands of light centred around selected wavelengths can be detected (herein referred to simply as "wavelengths"). The locus of each detector defines the wavelength of light that is received from gas sample chamber 22a. The number of wavelengths of light detected is simply a function of the number of light detectors 331-33n placed along the length of linear variable filter 35. To detect an additional passband of light simply requires the addition of another detector 33* at a site that corresponds to the desired wavelength of light. This configuration of elements minimises the complexity of the apparatus and enables additions and changes to be made with relative simplicity. The signals produced by the detectors 331-33n are output on signal leads 52 for further processing to identify both the presence and concentration of the various gas samples, as is described below.

The array of detector elements 33* mounted below the CO₂ filter 32 and linear variable filter 35 functions to produce a signal,of magnitude proportional to the intensity of the light incident on each detector element 33* in the array. The light incident on each detector 33* in the array is a function of the position of the detector 33* below the respective one of CO₂ filter 34 and linear variable filter 35. Also included in the light detector apparatus 30 are, optionally, preamplifier circuits 36, which function to condition the signals generated by the detectors 33* for transmission via leads 52 to the computation circuit 40.

The analogue signals output by each of the light detectors 33* are applied via leads 52 to a data conversion apparatus that is part of computation circuit 40, and which transforms the analogue measurement value output by the light detectors 33* (and conditioned by preamplifier circuits 36) into a digital value that can be used by the computation circuit 40 to perform its determination. In particular, Fig. 9 illustrates in block diagram form the overall architecture of a typical data conversion apparatus wherein the output of detectors 33* are applied to an amplifier 42 having a predetermined gain characteristic to produce a signal of sufficient magnitude for further processing. The amplifier output from each of the detectors 33* is applied under control of processor 46 to analogue to digital converter circuits 44 which convert the analogue amplified magnitude to a digital representation indicative of the magnitude of the intensity of the light beam that was received by the corresponding light detector element 33*. The digital data that are produced by the analogue to digital converters 44 are then loaded into an input register 45 where they are used by a processor 46 to produce digital values indicative of the magnitude of the received light beams. These computed digital values are then loaded into an output register 47 for transmission to additional circuitry in the computation circuit 40 to complete the analysis function.

It is well known pursuant to Beer's Law that the absorbance of a component contained in a gas sample is the product of the optical extinction coefficient of the component at the selected wavelength of light used to illuminate the gas sample, multiplied by the concentration of the component in the gas sample, multiplied by the length of the path the light takes through the gas sample. Each component in a gas sample has a unique pattern of light absorbance as a function of wavelength, which is termed its absorption spectrum. Since the absorbance of a component follows Beer's Law, linear analytical techniques can be used to identify and determine the concentration of various components that can be contained in a gas sample. If each of N components absorbed at a distinct wavelength (spectral absorption peak), only N spectral samples need be taken to uniquely determine the presence of any of the N components in a gas sample. However, spectral absorption peaks somewhat overlap among various related components, yet the absorption spectrum of the components are relatively distinct. Thus, by sampling the gas sample using greater than N spectral measurements, sufficient analytical data can be obtained to ensure accurate identification of components contained in the gas sample as well as their concentrations. In the gas sample identification apparatus 1, the spectral samples taken are used by computation circuit 40 to identify the component contained in the gas sample as well as its concentration. The computation circuit 40 uses a multi-variate statistical technique to precisely differentiate among the numerous anaesthetic agents. In particular, the anaesthetic agent monitoring apparatus 1 uses partial least squares as the computation method. This method has advantages over other computational techniques in that the regression coefficients and predicted concentrations for each analyte can be computed independent of each other. In addition, the partial least squares technique minimises errors in the determination of analyte concentration, which is one of the two measurements performed by the system. The partial least squares technique. is capable of learning the absorption spectrum of the components. A linear analytical technique is used during a calibration process to leam the pattem of a component's absorption signature. A training set of anaesthetic agents at various concentrations is submitted to the automatic gas sample identification apparatus as part of the calibration process. A predictive analytical model is then generated for these components to enable the computation circuit 40 to extrapolate the training set to whatever combination and concentration of components are included in a gas sample.

Partial least squares modelling is a multivariate statistical tool used for quantitative analysis of data. This method is capable of being a full-spectrum method and therefore by having a full spectrum has a signal averaging benefit. Since there is a substantially linear relationship between the measured absorbance and the component concentration in the gas sample, a calibration step is used to determine the relationship between the absorbance spectrum and the component concentration from the training set of calibration samples. The calibration step is followed by a prediction step wherein the results of the calibration are used to predict or estimate the component concentrations in the "unknown" sample present in the gas sampling chamber 20. These operational steps are also used in other multivariate statistical tools, such as classical least squares and multiple linear regression methods. A major disadvantage of classical least squares is that all interfering chemical components in the spectral region of interest need to be known and included in the calibration. A major disadvantage of multiple linear regression methods is that the analysis has to be restricted to a small number of frequencies since the number of frequencies is limited by the calibration mixtures, and increasing the number of frequencies results in an impractically large calibration set. In addition, measurement noise is included in the multiple linear regression methods, so the precision of prediction results is normally worse than partial least squares model. Partial least squares processing eliminates a significant amount of measurement noise through data reduction as discussed later. Partial least squares processing has advantages over other computational techniques in that the regression coefficients and predicted concentrations for each analyte can be computed independent of each other. In addition, the partial least squares technique is better suited to predict analyte concentration in the presence of nonlinearities.

In one embodiment of the partial least squares processor 48, the partial least squares analysis assumes an inverse linear model defined by the matrix equation:$\text{c = Ab + e}$ where the term A is the instrument response matrix (such as a collection of spectra) for a series of calibration samples, the term c is a vector with the concentrations of the anaesthetic agent of interest for all the calibration samples (here a model is constructed for one analyte at a time), the term b is a regression vector that contains the model parameters, and the term e is a vector of concentration residuals. The partial least squares analysis estimates the regression vector by calculating an estimate of the pseudo-inverse of the matrix A as follows:$\hat{\text{b}} {\text{= A}}^{\text{+}} \text{c}$

Estimating the pseudo-inverse matrix in partial least squares analysis is a three-step procedure. First, the response matrix A. is decomposed into two matrices as follows:${\text{A = Tp}}^{\text{T}}$ where the columns of the T matrix are orthogonal. The T and P matrices are commonly referred to as the scores and loadings matrices, respectively. The loading matrix P can be further decomposed into two matrices as follows:${\text{P = SV}}^{\text{T}}$ where the columns of the V matrix are orthogonal and S is a bidiagonal matrix. Therefore, the response matrix A is eventually decomposed into three matrices as follows:${\text{A = TSV}}^{\text{T}}$

A low dimension approximation through truncation of the matrices is then made so that all the relevant information is retained while the noise is filtered out. Finally, the pseudo-inverse of this approximation is calculated as follows:${\text{A}}^{\text{+}} \text{=} {\overline{\text{VS}}}^{\text{-1}} {\overline{\text{T}}}^{\text{T}}$ where the bars over the matrices indicate that the matrices are truncated to the optimal pseudo-rank. The pseudo-rank is corresponding to the number of columns in the truncated matrices. The selection of pseudo-rank is important such that the noise in the model is minimised and the predictive ability of the model is optimised. Once the pseudo-inverse of A is calculated during the calibration step, the regression vector b is estimated and the model obtained. Once the model is constructed, it is used for future predictions. The concentration of an analyte of interest in an unknown respiratory gas sample can therefore be estimated by the equation:${\hat{\text{c}}}_{\text{un}} \text{=} {\text{a}}_{\text{un}} {\text{}}^{\text{T}} \hat{\text{b}}$ where cᵤₙ is the estimate of the concentration of the analyte of interest in an unknown sample "un" and aᵤₙ is the instrument response measured for the unknown sample.

Thus, the data presented to the partial least squares processing system 48 in computation circuit 40 is processed using the above-noted relationship, once the appropriate training set is used to initialise the gas sample identification apparatus 1. The result of this processing is that a specific component contained in the gas sample present in the gas sampling chamber 22a is identified and its concentration determined. The results of this computation are displayed to the user via a display device 49 which presents an identification of the determined component and its concentration in human readable form, such as an alphanumeric readout. The accuracy of the displayed result is a function of the divergence of the gas sample from the set of calibration samples used to initialise the system as well as the degree of nonlinearity present in the system.

## Claims

1. Apparatus 1 for identifying the concentration of ones of n anaesthetic agent components contained in a respiratory gas sample, n being a positive integer greater than zero, is characterised by:
a gas sample chamber 20 having an inlet port 21a and an outlet port 21b and through which a respiratory gas sample to be analysed is passed from said inlet port 21a to said outlet port 21b;
means for irradiating said gas sample with light of predetermined frequency band as said respiratory gas sample passes through said gas sample chamber 20;
means 30 for detecting, at more than n selected wavelengths, light emanating from said gas sample chamber 20 as a result of irradiating said respiratory gas sample with said light of predetermined frequency band; and
means 40 for multi-variate statistically processing said detected light to identify a concentration of said anaesthetic agent components.

2. An apparatus as claimed in Claim 1, wherein each said anaesthetic agent component has a unique pattem of spectral wavelength absorbance characteristics and said more than n selected wavelengths of light are indicative of characteristic absorption wavelengths of light are indicative of characteristic absorption wavelengths of said anaesthetic agent components, and whereinsaid detecting means 30 detects an intensity of said light, said multi-variate statistically processing means 40 comprising:
a least squares processor 48 receiving data from said detecting means 30 representative of the intensity of light emanating from said gas sample chamber 20, as a result of irradiating said gas sample with said light of predetermined frequency band, at a corresponding one of said more than n selected spectral wavelengths, said least square processor 48 having at least one output, for outputting data indicative of a concentration of said identified anaesthetic agent components.

3. An apparatus as claimed in Claim 1 or 2 wherein each said anaesthetic agent component has a unique pattern of spectral wavelength absorbance characteristics, wherein said more than n selected wavelengths of light are indicative of characteristic absorption wavelengths of said anaesthetic agent components, and wherein said detecting means 30 detects an intensity of said light, said detecting means 30 comprising:
means 35 for filtering said light emanating from said gas sample chamber 20 in a spatially distributed manner over a range of wavelengths included in the band of 7 to 10 microns, wherein each of said more than n wavelengths of light exit said filtering means 35 at a corresponding predefined one of a plurality of loci; and
a plurality of detector means 331, each said detector means 331 being positioned opposite a corresponding locus on said filtering means to measure an intensity of a selected wavelength of light exiting said filtering means at said corresponding locus.

4. An apparatus as claimed in Claim 3 wherein said filtering means comprises a linear variable filter 35 whose frequency response varies in at least one dimension along a length of said linear variable filter and wherein said plurality of detector means 331 are configured in a linear array along said length of said linear variable filter 35.

5. An apparatus as claimed in Claim 4 wherein said linear variable filter 35 passes light of wavelength between 7.2 and 9.8 microns.

6. An apparatus as claimed in Claim 4 wherein said filter means passes narrow bands of light centred around said selected wavelengths.

7. An apparatus as claimed in Claim 6 wherein said narrow bands of light passed by said filter means comprise a bandwidth of 0.69% of the centred wavelength.

8. An apparatus as claimed in any one of Claims 3 to 7 further comprising:
means 34 for filtering said light emanating from said gas sample chamber 20 to pass a selected passband of light in the range of 4 to 5 microns; and
means for determining a concentration of CO₂ in said gas sample by determining an intensity of said light passed by said filtering means 34.

9. An apparatus as claimed in Claim 8 wherein said 4 to 5 micron filtering means 34 is juxtaposed to said 7 to 10 micron filtering means 35 to together receive said light emanating from said gas sample chamber 20.

10. A method for identifying the concentration of ones of n anaesthetic agent components contained in a respiratory gas sample, n being a positive integer greater than zero, comprising the steps of:
passing through a gas sample chamber, having an inlet port and an outlet port, a respiratory gas sample to be analysed from said inlet port to said outlet port;
irradiating said gas sample with light of predetermined frequency and as said respiratory gas sample passes through said gas sample chamber;
detecting, at more than n selected wavelengths, light emanating from said gas sample chamber as a result of irradiating said respiratory gas sample with said light of predetermined frequency band, and
multi-variate statistically processing said detected light to identify a concentration of said anaesthetic agent components.

11. The method of Claim 10, wherein said step of multi-variate statistically processing comprises a least squares processor receiving data from more than n detectors in response to light emanating from said gas sample chamber, as a result of irradiating said gas sample with said light of said predetermined frequency band, at a corresponding one of said more than n selected spectral wavelengths, said least squares processor having at least one output for outputting data for use in determining a concentration of said identified anaesthetic agent components.

12. The method of Claim 10, wherein each said anaesthetic agent component has a unique pattern of spectral wavelength absorbance characteristics and said more than n selected wavelengths of light are indicative of characteristic absorption wavelengths of said anaesthetic agent components, and wherein said detecting step an intensity of said light is detected, said step of detecting comprising:
filtering said light emanating from said gas sample chamber in a spatially distributed manner over a range of wavelengths included in the band of 7 to 10 microns using a spatially varying filter, wherein each of said more than n wavelengths of light exit said spatially varying filter at a corresponding predefined one of a plurality of loci; and
measuring, using a plurality of detectors, each said detector being positioned opposite a corresponding locus on said filter, an intensity of a selected wavelength of light existing said filter at said corresponding locus.
